# EUROPEAN PATENT APPLICATION

(11) **EP 4 600 520 A1**
(43) Date of publication of application: **13.08.2025**
(21) Application number: 23874615.0
(22) Date of filing: 14.09.2023
(51) Int. Cl.: F16C 33/64, C21D 1/06, C21D 9/36, C21D 9/40, C22C 38/00, C22C 38/46, F16C 19/06, F16C 33/32, F16C 33/62, F16H 25/22

(54) **MECHANICAL COMPONENT, ROLLING BEARING, AND BALL SCREW**

(30) Priority: 04.10.2022 JP 2022160271
(71) Applicant: NTN Corporation, Osaka-shi Osaka 530-0005 (JP)
(72) Inventor: MIZUTA, Kohei, Kuwana-shi, Mie 511-0867 (JP); FUJIMURA, Naoki, Kuwana-shi, Mie 511-0867 (JP); YAMADA, Masahiro, Kuwana-shi, Mie 511-0867 (JP)
(74) Representative: Bockhorni & Brüntjen Partnerschaft Patentanwälte mbB
(86) International application number: PCT/JP2023/033507
(87) International publication number: WO 2024/075486

(57) **Abstract**

A mechanical component is made of steel subjected to quenching and tempering, and the mechanical component includes a carbonitrided layer on a surface thereof. The steel contains 0.13 mass % or more and 0.58 mass % or less of C, 0.15 mass % or more and 0.35 mass % or less of Si, 0.6 mass % or more and 1.1 mass % or less of Mn, less than 0.025 mass ppm of P, less than 0.025 mass ppm of S, 1.2 mass % or less of Cr, 0.3 mass % or less of Mo, 0.25 mass % or less of V, and 0.25 mass % or less of Ni, with a remainder being composed of Fe and an unavoidable impurity. An average carbon concentration in the steel at the surface is equal to or more than 0.6 mass %. An average nitrogen concentration in the steel at the surface is equal to or more than 0.10 mass %.

## Description

### TECHNICAL FIELD

The present invention relates to a mechanical component, a rolling bearing and a ball screw.

### BACKGROUND ART

In recent years, electrification has been progressing mainly in a battery electric vehicle (BEV), a plug-in hybrid electric vehicle (PHEV) and a hybrid electric vehicle (HEV). For example, a hydraulic brake has been replaced by an electric brake, and an engine and a transmission have been replaced by an electric axle (E-Axle) composed of a drive motor, a reduction gear and an inverter. In addition, an electric continuously variable transmission (CVT), which is a combination of an electric variable valve mechanism (VTC), an electric compressor and a drive motor with a CVT, has been used.

In the electrified components as described above, a rolling bearing or a ball screw is used. In the rolling bearing, a rolling element comes into contact with raceway surfaces of an inner ring and an outer ring. In the ball screw, a rolling element comes into contact with a shaft and a raceway surface of an outer ring (nut).

A static load capacity is defined as a maximum contact pressure between a rolling element and a raceway surface when a value calculated by dividing a depth of a dent formed in the raceway surface by a diameter of the rolling element is 1/10000. A static rated load is calculated by load conversion of the static load capacity.

In an electric vehicle, in order to improve electric power efficiency, it is important to reduce the weight of the electric vehicle. Therefore, reduction in size of a rolling bearing or a ball screw is required. When a load exceeding the static rated load is applied to the rolling bearing or the ball screw, a dent is formed in a raceway surface and the dent may lead to the occurrence of early damage and an increase in abnormal sound and vibration. The static rated load increases as the size of the rolling bearing or the ball screw increases. Therefore, when a large load is applied to the rolling bearing or the ball screw, the size of the rolling bearing or the ball screw is increased, thereby suppressing the formation of the dent in the raceway surface. However, this results in an increase in size of the electrified component, and thus, the reduction in weight of the electric vehicle cannot be achieved.

The static rated capacity can also be increased by increasing the static load capacity. Therefore, if the static load capacity can be increased, the formation of the dent in the raceway surface can be suppressed without increasing the size of the rolling bearing or the ball screw, which can in turn lead to the reduction in size of the rolling bearing or the ball screw.

For example, Japanese Patent Laying-Open No. 2013-119930 (PTL 1) describes that tempering is performed at a high temperature (a temperature equal to or higher than 240°C and equal to or lower than 300°C), thereby decreasing a volume ratio of retained austenite in steel at a raceway surface and improving a static load capacity at the raceway surface.

### CITATION LIST

### PATENT LITERATURE

PTL 1: Japanese Patent Laying-Open No. 2013-119930

### SUMMARY OF INVENTION

### TECHNICAL PROBLEM

However, when tempering is performed at a high temperature as described in PTL 1, a hardness of steel at the raceway surface decreases. When the hardness of steel at the raceway surface decreases, it is concerned that a rolling fatigue life may decrease due to surface-originated flaking, internally-originated flaking, dent-originated flaking or hydrogen embrittlement flaking and a wear resistance at the raceway surface may decrease.

The present invention has been made in view of the above-described problem of the conventional technique. More specifically, the present invention provides a mechanical component, a rolling bearing and a ball screw that are capable of ensuring a hardness at a surface while improving a static load capacity at the surface.

### SOLUTION TO PROBLEM

A mechanical component according to the present invention is made of steel subjected to quenching and tempering. The mechanical component includes a carbonitrided layer on a surface thereof. The steel contains 0.13 mass % or more and 0.58 mass % or less of carbon, 0.15 mass % or more and 0.35 mass % or less of silicon, 0.6 mass % or more and 1.1 mass % or less of manganese, less than 0.025 mass ppm of phosphorus, less than 0.025 mass ppm of sulfur, 1.2 mass % or less of chromium, 0.3 mass % or less of molybdenum, 0.25 mass % or less of vanadium, and 0.25 mass % or less of nickel, with a remainder being composed of iron and an unavoidable impurity. An average carbon concentration in the steel at the surface is equal to or more than 0.6 mass %. An average nitrogen concentration in the steel at the surface is equal to or more than 0.10 mass %. A hardness of the steel at the surface is equal to or more than 800 Hv. A volume ratio of retained austenite in the steel at the surface is equal to or less than 22%. The mechanical component comes into contact with a rolling element at at least a part of the surface. A hardness of the steel at a position where a depth from the surface is 0.02 times or more and 0.03 times or less a diameter of the rolling element is equal to or more than 750 Hv. A volume ratio of retained austenite in the steel at the position where the depth from the surface is 0.02 times or more and 0.03 times or less the diameter of the rolling element is equal to or less than 20%.

In the mechanical component, a depth of a dent formed in the surface when the rolling element comes into contact with the surface may be equal to or less than 0.5 µm. In the mechanical component, a static load capacity may be equal to or less than 5.3 GPa.

A rolling bearing according to the present invention includes an inner ring, an outer ring and a rolling element. At least one of the inner ring, the outer ring and the rolling element is the above-described mechanical component. A ball screw according to the present invention includes a screw shaft, a ball nut and a ball. At least one of the screw shaft, the ball nut and the ball is the above-described mechanical component.

### ADVANTAGEOUS EFFECTS OF INVENTION

The mechanical component, the rolling bearing and the ball screw according to the present invention are capable of ensuring the hardness at the surface while improving the static load capacity at the surface.

### BRIEF DESCRIPTION OF DRAWINGS

Fig. 1 is a cross-sectional view of a rolling bearing 100.
Fig. 2 is a diagram of a process for manufacturing rolling bearing 100.
Fig. 3 is a graph showing a relationship between a depth of a dent when a maximum contact pressure based on an estimation formula 1 is 4.5 GPa and an actual measurement value of the depth of the dent when the maximum contact pressure is 4.5 GPa.
Fig. 4 is a graph showing a relationship between a static load capacity based on an estimation formula 2 and an actual measurement value of the static load capacity.
Fig. 5 is a cross-sectional view of a ball screw 110.

### DESCRIPTION OF EMBODIMENTS

Details of an embodiment will be described with reference to the drawings. In the following drawings, the same or corresponding portions are denoted by the same reference characters and redundant description will not be repeated. A rolling bearing according to the embodiment is denoted as a rolling bearing 100.

### (Configuration of Rolling Bearing 100)

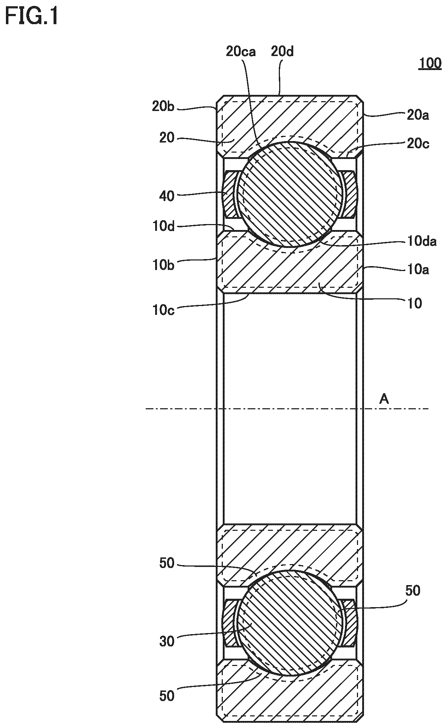

Fig. 1 is a cross-sectional view of rolling bearing 100. As shown in Fig. 1, rolling bearing 100 is, for example, a deep groove ball bearing. Rolling bearing 100 has an inner ring 10, an outer ring 20, a plurality of rolling elements 30, and a cage 40. A central axis of inner ring 10 is defined as a central axis A. A direction of central axis A is defined as an axial direction. A direction along a circumference around central axis A when viewed along the axial direction is defined as a circumferential direction. A direction passing through central axis A and being orthogonal to central axis A is defined as a radial direction.

Inner ring 10 has a ring shape. Inner ring 10 has a width surface 10a, a width surface 10b, a radially inner surface 10c, and a radially outer surface 10d. Width surface 10a, width surface 10b, radially inner surface 10c, and radially outer surface 10d may be collectively referred to as a surface of inner ring 10.

Width surface 10a and width surface 10b are end surfaces of inner ring 10 in the axial direction. Width surface 10a faces toward one side (right side in Fig. 1) in the axial direction. Width surface 10b is a surface opposite to width surface 10a in the axial direction. Width surface 10b faces toward the other side (left side in Fig. 1) in the axial direction.

Radially inner surface 10c extends in the circumferential direction. One end and the other end of radially inner surface 10c in the axial direction are continuous to width surface 10a and width surface 10b, respectively. Radially inner surface 10c faces inward in the radial direction. That is, radially inner surface 10c faces toward the central axis A side.

Radially outer surface 10d extends in the circumferential direction. One end and the other end of radially outer surface 10d in the axial direction are continuous to width surface 10a and width surface 10b, respectively. Radially outer surface 10d is a surface opposite to radially inner surface 10c in the radial direction. That is, radially outer surface 10d faces outward in the radial direction.

Inner ring 10 is fitted to a shaft (not shown) at radially inner surface 10c. Radially outer surface 10d has a raceway surface 10da. Radially outer surface 10d comes into contact with rolling element 30 at raceway surface 10da. Raceway surface 10da is located at the center of radially outer surface 10d in the axial direction. In a cross-sectional view orthogonal to the circumferential direction, raceway surface 10da has, for example, a partial arc shape.

Outer ring 20 has a ring shape. Outer ring 20 has a width surface 20a, a width surface 20b, a radially inner surface 20c, and a radially outer surface 20d. Width surface 20a, width surface 20b, radially inner surface 20c, and radially outer surface 20d may be collectively referred to as a surface of outer ring 20.

Width surface 20a and width surface 20b are end surfaces of outer ring 20 in the axial direction. Width surface 20a faces toward one side in the axial direction. Width surface 20b is a surface opposite to width surface 20a in the axial direction. Width surface 20b faces toward the other side in the axial direction.

Radially inner surface 20c extends in the circumferential direction. One end and the other end of radially inner surface 20c in the axial direction are continuous to width surface 20a and width surface 20b, respectively. Radially inner surface 20c faces inward in the radial direction. That is, radially inner surface 20c faces toward the central axis A side.

Radially outer surface 20d extends in the circumferential direction. One end and the other end of radially outer surface 20d in the axial direction are continuous to width surface 20a and width surface 20b, respectively. Radially outer surface 20d is a surface opposite to radially inner surface 20c in the radial direction. That is, radially outer surface 20d faces outward in the radial direction.

Outer ring 20 is fitted to a housing (not shown) at radially outer surface 20d. Radially inner surface 20c has a raceway surface 20ca. Radially inner surface 20c comes into contact with rolling element 30 at raceway surface 20ca. Raceway surface 20ca is located at the center of radially inner surface 20c in the axial direction. In a cross-sectional view orthogonal to the circumferential direction, raceway surface 20ca has, for example, a partial arc shape. Outer ring 20 is disposed radially outward of inner ring 10 such that radially inner surface 20c faces radially outer surface 10d in the radial direction with a spacing therebetween (raceway surface 20ca faces raceway surface 10da in the radial direction with a spacing therebetween).

Rolling element 30 has, for example, a spherical shape. Rolling element 30 is disposed between raceway surface 10da and raceway surface 20ca. The plurality of rolling elements 30 are arranged in the circumferential direction between raceway surface 10da and raceway surface 20ca. A surface of rolling element 30 comes into contact with raceway surface 10da and raceway surface 20ca. Cage 40 retains the plurality of rolling elements 30 such that a spacing in the circumferential direction between adjacent two rolling elements 30 is within a certain range.

Each of inner ring 10, outer ring 20 and rolling element 30 is made of steel subjected to quenching and tempering. Steel that forms each of inner ring 10, outer ring 20 and rolling element 30 has the composition shown in Table 1. Steel that forms inner ring 10, steel that forms outer ring 20, and steel that forms rolling element 30 do not necessarily need to have the same composition.

### [Table 1]

**Table 1**

| C (mass %) | Si (mass %) | Mn (mass %) | P (mass ppm) | S (mass ppm) | Cr (mass %) | Mo (mass %) | V (mass %) | Ni (mass %) |
|---|---|---|---|---|---|---|---|---|
| 0.13 or more and 0.58 or less | 0.15 or more and 0.35 or less | 0.6 or more and 1.1 or less | less than 0.025 | less than 0.025 | 1.2 or less | 0.3 or less | 0.25 or less | 0.25 or less |

As shown in Table 1, steel that forms each of inner ring 10, outer ring 20 and rolling element 30 contains 0.13 mass % or more and 0.58 mass % or less of carbon, 0.15 mass % or more and 0.35 mass % or less of silicon, 0.6 mass % or more and 1.1 mass % or less of manganese, less than 0.025 mass ppm of phosphorus, less than 0.025 mass ppm of sulfur, 1.2 mass % or less of chromium, 0.3 mass % or less of molybdenum, 0.25 mass % or less of vanadium, and 0.25 mass % or less of nickel. A remainder of steel that forms each of inner ring 10, outer ring 20 and rolling element 30 is composed of iron and an unavoidable impurity.

Steel shown in Table 1 does not necessarily need to contain at least one of chromium, molybdenum, vanadium, and nickel. Lower limit values of contents of chromium, molybdenum, vanadium, and nickel are preferably 0.35 mass %, 0.15 mass %, 0.10 mass %, and 0.10 mass %, respectively. In addition, steel shown in Table 1 does not necessarily need to contain at least one of phosphorus and sulfur.

Specific examples of steel shown in Table 1 include S15C, S25C, S45C, S50C, S53C, S55C, SCM415, SCM418, SCM420, SCM435, SCM440, SCM445, SCr415, SCr420, SCr435, and SNCM420 defined under JIS standards, W1-8, 1015, 1025, 1045, 1050, 4130, 4135, 4140, 4145, 4161, 4320, 5120, 5130, 5135, and 5140 defined under AISI (SAE) standards, C15, C25, C50, 20Cr4, 37Cr4, 18CrMo4, 34CrMo4, 42CrMo4, 22CrMoS35, and 60CrMo32 defined under ISO standards, G20CrMo, 50Mn and 45 defined under GB standards, and the like.

A carbonitrided layer 50 is formed on each of the surface of inner ring 10, the surface of outer ring 20 and the surface of rolling element 30. A carbon concentration and a nitrogen concentration are higher in carbonitrided layer 50 than in a portion where carbonitrided layer 50 is not formed. Preferably, in carbonitrided layer 50, carbon and nitrogen are contained in iron in a solid-solution state and do not form a compound. An average carbon concentration in steel at each of the surface of inner ring 10, the surface of outer ring 20 and the surface of rolling element 30 is equal to or more than 0.6 mass %. An average nitrogen concentration in steel at each of the surface of inner ring 10, the surface of outer ring 20 and the surface of rolling element 30 is equal to or more than 0.10 mass %.

The average carbon concentration and the average nitrogen concentration in steel at each of the surface of inner ring 10, the surface of outer ring 20 and the surface of rolling element 30 are measured by line analysis using an electron probe micro analyzer (EPMA). At this time, a calibration curve is drawn by using a standard sample whose carbon concentration and nitrogen concentration are clearly known.

A hardness of steel at each of the surface of inner ring 10, the surface of outer ring 20 and the surface of rolling element 30 is equal to or more than 800 Hv. The hardness of steel at each of the surface of inner ring 10, the surface of outer ring 20 and the surface of rolling element 30 is measured at a load of 300 g by using a Vickers hardness tester defined under JIS standards. The hardness of steel at each of the surface of inner ring 10, the surface of outer ring 20 and the surface of rolling element 30 is measured in at least three points and an average value of measurement values is adopted.

A position where a depth from each of the surface of inner ring 10, the surface of outer ring 20 and the surface of rolling element 30 is 0.02 times or more and 0.03 times or less a diameter of rolling element 30 is defined as a maximum internal stress position. The maximum internal stress position corresponds to a position where an internal stress is maximized when a maximum contact pressure between raceway surface 10da (raceway surface 20ca) and the surface of rolling element 30 is 4.5 GPa. A hardness of steel at the maximum internal stress position is equal to or more than 750 Hv. The hardness of steel at the maximum internal stress position is measured by the same method as the method for measuring the hardness of steel at each of the surface of inner ring 10, the surface of outer ring 20 and the surface of rolling element 30.

A volume ratio of retained austenite in steel at each of the surface of inner ring 10, the surface of outer ring 20 and the surface of rolling element 30 is equal to or less than 22%. A volume ratio of retained austenite in steel at the maximum internal stress position is equal to or less than 20%. The volume ratio of retained austenite in steel is measured using an X-ray diffraction apparatus of a Cr tube type.

In this measurement, inner ring 10, outer ring 20 and rolling element 30 are subjected to electrolytic polishing in order not to cause deformation-induced transformation of a structure of steel. In this measurement, the X-ray diffraction apparatus of a Cr tube type is used under such conditions that a wavelength of Cr-Kα is 2.29093×10⁻¹⁰ m, a tube voltage is 30 kV, a tube current is 10 mA, and a collimator size is 2 mm × 2 mm. An X-ray profile of martensite is measured within a range where 2θ is not smaller than 142.75° and not larger than 170.8°. An X-ray profile of austenite is measured within a range where 2θ is not smaller than 114.75° and not larger than 142.8°. These X-ray profiles are subjected to background processing. Based on these X-ray profiles, the volume ratio of retained austenite is determined.

A depth of a dent formed in raceway surface 10da (raceway surface 20ca) when raceway surface 10da (raceway surface 20ca) and the surface of rolling element 30 are in contact with each other at the maximum contact pressure of 4.5 GPa is preferably equal to or less than 0.5 µm. The depth of the dent formed in raceway surface 10da (raceway surface 20ca) when raceway surface 10da (raceway surface 20ca) and the surface of rolling element 30 are in contact with each other at the maximum contact pressure of 4.5 GPa is measured by the following method.

Firstly, rolling element 30 is pressed against raceway surface 10da (raceway surface 20ca) with the use of an autograph. A load at this time is adjusted such that the maximum contact pressure between raceway surface 10da (raceway surface 20ca) and the surface of rolling element 30 is 4.5 GPa. Rolling element 30 used at this time is a ceramic ball in order to prevent deformation of rolling element 30. **In** addition, a loading speed at this time is set to 3 N/second and a load is held for 120 seconds after a desired load is reached. Secondly, the depth of the dent formed in raceway surface 10da (raceway surface 20ca) is measured with the use of a white light interferometric function of a laser microscope.

A static load capacity at each of raceway surface 10da and raceway surface 20ca is preferably equal to or more than 5.3 GPa. The static load capacity at raceway surface 10da (raceway surface 20ca) is the maximum contact pressure between raceway surface 10da (raceway surface 20ca) and the surface of rolling element 30 when a value calculated by dividing the depth of the dent formed in raceway surface 10da (raceway surface 20ca) by the diameter of rolling element 30 is 1/10000. The static load capacity at raceway surface 10da (raceway surface 20ca) is measured by the following method.

Firstly, the depth of the dent formed in raceway surface 10da (raceway surface 20ca) is sequentially measured with the maximum contact pressure between raceway surface 10da (raceway surface 20ca) and the surface of rolling element 30 being sequentially varied with the autograph. Secondly, the maximum contact pressure between raceway surface 10da (raceway surface 20ca) and the surface of rolling element 30 when the depth of the dent measured in this way is 1/10000 of the diameter of rolling element 30 is determined. This maximum contact pressure is defined as the static load capacity at raceway surface 10da (raceway surface 20ca).

### (Method for Manufacturing Rolling Bearing 100)

A method for manufacturing rolling bearing 100 will be described below.

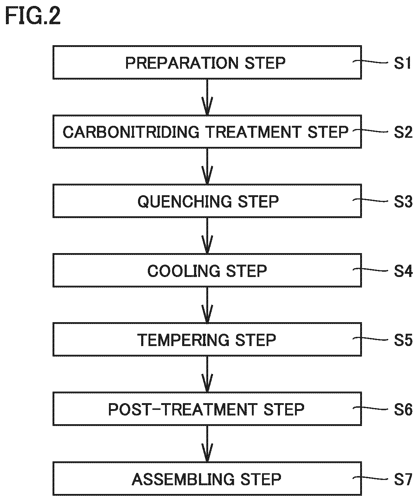

Fig. 2 is a diagram of a process for manufacturing rolling bearing 100. As shown in Fig. 2, the method for manufacturing rolling bearing 100 has a preparation step S1, a carbonitriding treatment step S2, a quenching step S3, a cooling step S4, a tempering step S5, a post-treatment step S6, and an assembling step S7.

In preparation step S1, a workpiece is prepared. The workpiece is made of steel having the composition shown in Table 1. The workpiece for each of inner ring 10 and outer ring 20 has a ring shape, and the workpiece for rolling element 30 has a spherical shape.

Carbonitriding treatment step S2 is performed after preparation step S1. Carbonitriding treatment step S2 is performed by heating and holding the workpiece in atmospheric gas containing a carbon source and a nitrogen source. A heating temperature in carbonitriding treatment step S2 is a temperature equal to or higher than an A₁ transformation point of steel that forms the workpiece. This heating temperature is, for example, equal to or higher than 800°C. By heating and holding in carbonitriding treatment step S2, carbon and nitrogen are introduced from a surface of the workpiece, and are dissolved in steel in a solid-solution state in the vicinity of the surface of the workpiece. Carbonitriding treatment step S2 is performed such that carbon and nitrogen are diffused to a position that will be each of the surface of inner ring 10, the surface of outer ring 20 and the surface of rolling element 30 after post-treatment step S6.

Quenching step S3 is performed after carbonitriding treatment step S2. Quenching step S3 is performed by cooling the workpiece from the temperature equal to or higher than the A₁ transformation point to a temperature equal to or lower than an Mₛ transformation point. Cooling step S4 is performed after quenching step S3. Cooling step S4 is sub zero treatment or cryogenic treatment. In the sub zero treatment, the workpiece is cooled to a temperature exceeding -100°C and not higher than a room temperature. In the cryogenic treatment, the workpiece is cooled to a temperature equal to or lower than -100°C.

By performing the sub zero treatment and the cryogenic treatment, martensitic transformation in steel progresses and the volume ratio of retained austenite in steel decreases. Since carbonitriding treatment step S2 is usually treatment for increasing the volume ratio of retained austenite in steel, the sub zero treatment or the cryogenic treatment is not usually performed when carbonitriding treatment step S2 is performed.

Tempering step S5 is performed after cooling step S4. Tempering step S5 is performed by heating and holding the workpiece at a temperature lower than the A₁ transformation point. A heating temperature in tempering step S5 is, for example, 180°C.

Post-treatment step S6 is performed after tempering step S5. In post-treatment step S6, the surface of the workpiece is machined (for example, ground and polished). Inner ring 10, outer ring 20 and rolling element 30 are thus formed. Assembling step S7 is performed after post-treatment step S6. In assembling step S7, inner ring 10, outer ring 20 and rolling element 30 are assembled together with cage 40 and rolling bearing 100 having the structure shown in Fig. 1 is thus obtained.

### (Effect of Rolling Bearing 100)

An effect of rolling bearing 100 will be described below.

When tempering is performed at a high temperature (for example, equal to or higher than 240°C) to form a bearing ring or a rolling element, the hardness of steel at the surface decreases, although the volume ratio of retained austenite in steel at the surface decreases and the static load capacity is thereby improved. On the other hand, since inner ring 10, outer ring 20 and rolling element 30 are subjected to the sub zero treatment or the cryogenic treatment in cooling step S4, the volume ratio of retained austenite in steel at the surface decreases and a volume ratio of martensite in steel at the surface increases, and thus, the hardness at the surface increases.

In addition, with the sub zero treatment or the cryogenic treatment, dislocation densities of martensite and retained austenite in steel at the surface increase. Furthermore, since carbonitriding treatment step S2 is performed during formation of inner ring 10, outer ring 20 and rolling element 30, steel is reinforced by the solid solution at the surface. In this way, it is possible to ensure the hardness (specifically, equal to or more than 800 Hv) while ensuring the static load capacity at each of the surface of inner ring 10, the surface of outer ring 20 and the surface of rolling element 30.

### (Examples)

Samples 1 to 7 were prepared in order to evaluate a relationship of the average carbon concentration in steel at the surface, the average nitrogen concentration in steel at the surface, the hardness of steel at the surface, and the volume ratio of retained austenite in steel at the surface with the sub zero treatment or the cryogenic treatment. Details of samples 1 to 7 are shown in Table 2.

### [Table 2]

**Table 2**

| Sample | Steel type | Characteristics at surface | | | | Characteristics at maximum internal stress position | | Test Result | | |
|---|---|---|---|---|---|---|---|---|---|---|
| | | Hardness (Hv) | Volume ratio of retained γ(%) | Average carbon concentration (mass %) | Average nitrogen concentration (mass %) | Hardness (Hv) | Volume ratio of retained γ(%) | Static load capacity (GPa) | Depth of dent (µm) | Evaluation |
| 1 | S53C | 881 | 14.4 | 0.97 | 0.42 | 876 | 13.7 | 6.71 | 0.206 | OK |
| 2 | SCM435 | 806 | 15.7 | 0.73 | 0.34 | 807 | 16.6 | 5.83 | 0.249 | OK |
| 3 | SCM420 | 838 | 9.6 | 0.64 | 0.43 | 770 | 7.4 | 5.56 | 0.200 | OK |
| 4 | SCM420 | 818 | 18.5 | 0.75 | 0.34 | 805 | 18.8 | 5.54 | 0.324 | OK |
| 5 | SCM435 | 721 | 22.4 | 0.89 | 0.27 | 714 | 19.7 | 4.90 | 0.563 | NG |
| 6 | SCM420 | 849 | 9.4 | 0.36 | 0.70 | 725 | 6.75 | 4.90 | 0.503 | NG |
| 7 | SCM435 | 684 | 31.3 | 0.78 | 0.39 | 719 | 21.3 | 5.00 | 0.590 | NG |

Each of samples 1 to 7 is a member in the form of a flat plate having a diameter of 85 mm × a thickness of 5 mm. For samples 1 to 7, the steel type, the average carbon concentration at the surface, the average nitrogen concentration at the surface, the volume ratio of retained austenite in steel at the surface, and the hardness of steel at the surface were varied. The steel type of each of samples 1 to 7 is included in steel having the composition shown in Table 1.

For samples 1 to 7, carbonitriding treatment step S2, quenching step S3 and tempering step S5 were performed. For samples 1, 3 and 6, the cryogenic treatment was performed as cooling step S4, and for samples 2 and 4, the sub zero treatment was performed as cooling step S4. On the other hand, for samples 5 and 7, cooling step S4 was not performed.

The average carbon concentration at the surface being equal to or more than 0.6 mass % is defined as a condition A. The average nitrogen concentration at the surface being equal to or more than 0.10 mass % is defined as a condition B. The volume ratio of retained austenite in steel at the surface being equal to or less than 22% is defined as a condition C. The hardness of steel at the surface being equal to or more than 800 Hv is defined as a condition D.

The hardness of steel at the maximum internal stress position being equal to or more than 750 Hv is defined as a condition E. The volume ratio of retained austenite in steel at the maximum internal stress position being equal to or less than 20% is defined as a condition F. For samples 1 to 4, all of conditions A to F were satisfied. For sample 5, conditions C, D and E were not satisfied. For sample 6, condition E was not satisfied. For sample 7, conditions C, D, E, and F were not satisfied.

A ceramic ball having a diameter of 3/8 inches was pressed against the surface of each of samples 1 to 7, and the depth of the dent formed when the maximum contact pressure of 4.5 GPa was applied and the static load capacity were measured. "OK" in Table 1 indicates that the static load capacity is equal to or more than 5.3 GPa and the depth of the dent is equal to or less than 0.5 µm. "NG" in Table 1 indicates that the static load capacity is less than 5.3 GPa or the depth of the dent exceeds 0.5 µm.

For samples 1 to 4, evaluation about the depth of the dent formed when the maximum contact pressure of 4.5 GPa was applied and the static load capacity was good. On the other hand, for samples 5 to 7, evaluation about the depth of the dent formed when the maximum contact pressure of 4.5 GPa was applied and the static load capacity was not good. It was clarified based on this comparison that the static load capacity (resistance-to-dent-formation capability) was improved by satisfaction of all of conditions A to F.

In order to examine a relationship of the depth of the dent at the surface with the hardness in steel and the volume ratio of retained austenite in steel at the maximum internal stress position, samples 1 to 7 were subjected to multiple regression analysis. As a result, the following estimation formula (estimation formula 1) was obtained: the depth (µm) of the dent when the maximum contact pressure was 4.5 GPa = 2.04 + 9.57 × 10-3 × the hardness (Hv) of steel at the maximum internal stress position - 2.33 × 10-3 × the volume ratio (%) of retained austenite in steel at the maximum internal stress position.

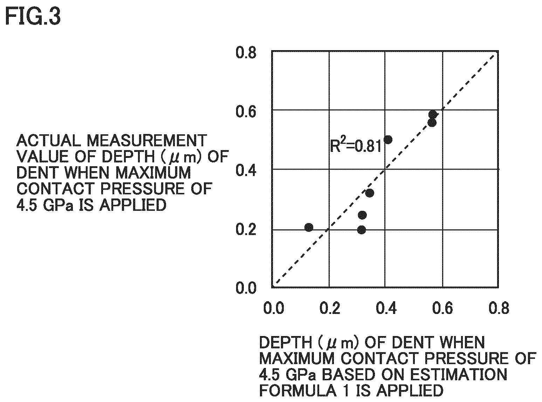

Fig. 3 is a graph showing a relationship between the depth of the dent when the maximum contact pressure based on estimation formula 1 is 4.5 GPa and an actual measurement value of the depth of the dent when the maximum contact pressure is 4.5 GPa. As shown in Fig. 3, a degree of contribution (R²) of estimation formula 1 was 0.81. From this fact, it can be found that, by setting the hardness of steel at the maximum internal stress position to be equal to or more than 750 Hv and setting the volume ratio of retained austenite at the maximum internal stress position to be equal to or less than 20%, the depth of the dent when the maximum contact pressure is 4.5 GPa can be equal to or less than 0.5 µm.

In order to examine a relationship of the static load capacity with the hardness of steel and the volume ratio of retained austenite in steel at the maximum internal stress position, samples 1 to 7 were subjected to multiple regression analysis. As a result, the following estimation formula (estimation formula 2) was obtained: the static load capacity (GPa) = -2.15 + 9.88 × 10-3 × the hardness (Hv) of steel at the maximum internal stress position + 2.25 × 10-3 × the volume ratio (%) of retained austenite in steel at the maximum internal stress position.

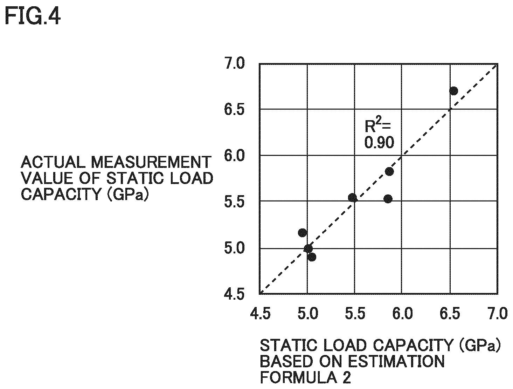

Fig. 4 is a graph showing a relationship between the static load capacity based on estimation formula 2 and an actual measurement value of the static load capacity. As shown in Fig. 4, the degree of contribution (R²) of estimation formula 2 was 0.90. From this fact, it can be found that, by setting the hardness of steel at the maximum internal stress position to be equal to or more than 750 Hv and setting the volume ratio of retained austenite at the maximum internal stress position to be equal to or less than 20%, the static load capacity can be equal to or more than 5.3 GPa.

### (Modifications)

The example in which carbonitrided layers 50 are formed on all of the surface of inner ring 10, the surface of outer ring 20 and the surface of rolling element 30 has been described above. However, carbonitrided layer 50 may be formed on any one of the surface of inner ring 10, the surface of outer ring 20 and the surface of rolling element 30. The example in which inner ring 10, outer ring 20 and rolling element 30 are all made of steel having the composition shown in Table 1 has been described above. However, any one of inner ring 10, outer ring 20 and rolling element 30 may not be made of steel having the composition shown in Table 1. The example in which conditions A to F are satisfied at all of the surface of inner ring 10, the surface of outer ring 20 and the surface of rolling element 30 has been described above. However, conditions A to F may be satisfied at any one of the surface of inner ring 10, the surface of outer ring 20 and the surface of rolling element 30.

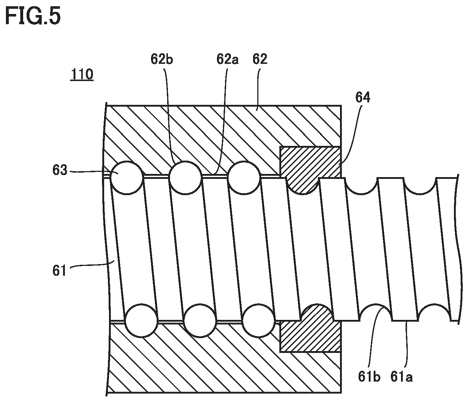

Rolling bearing 100 has been described above by way of example. However, the above-described configuration is applicable to, for example, a ball screw. A ball screw according to an embodiment is denoted as a ball screw 110. Fig. 5 is a cross-sectional view of ball screw 110. As shown in Fig. 5, ball screw 110 has a screw shaft 61, a ball nut 62, a plurality of balls 63, and a sealing member 64. A system of circulation of balls 63 in ball screw 110 is not particularly limited. The system of circulation of balls 63 in ball screw 110 is, for example, a tube system, a return tube (pipe) system, a deflector system, an end deflector system, an end cap system, an internal defector system, and the like.

Screw shaft 61 has an outer circumferential surface 61a. A thread 61b is provided in outer circumferential surface 61a. Ball nut 62 is provided with a hole that extends along a direction of a central axis of screw shaft 61. An inner wall surface of this hole is an inner circumferential surface 62a of ball nut 62. Inner circumferential surface 62a is provided with a thread 62b. Screw shaft 61 is inserted in ball nut 62 such that outer circumferential surface 61a faces inner circumferential surface 62a. Ball 63 is disposed between thread 61b and thread 62b. The hole in ball nut 62 through which screw shaft 61 passes is closed by sealing member 64. Screw shaft 61 passes also through a hole provided in sealing member 64.

As screw shaft 61 is rotated around the central axis thereof, rotational motive power of screw shaft 61 is transmitted to ball nut 62 through ball 63, and ball nut 62 moves along the direction of the central axis of screw shaft 61. In other words, ball screw 110 is an apparatus that converts rotational motion of a motor or the like to linear motion. Ball screw 110 is used, for example, in an electric actuator, a positioning apparatus, an electric jack, a servo cylinder, an electric servo pressing machine, a mechanical pressing machine, an electric brake apparatus, a transmission, an electric power steering apparatus, an electric injection molding machine, and the like.

Each of screw shaft 61, ball nut 62 and ball 63 is made of steel subjected to quenching and tempering. Steel that forms each of screw shaft 61, ball but 62 and ball 63 has the composition shown in Table 1. However, any one of steel that forms screw shaft 61, steel that forms ball but 62, and the steel that forms ball 63 may not have the composition shown in Table 1. Although not shown, carbonitrided layer 50 is formed on at least one of a surface of screw shaft 61, a surface of ball nut 62 and a surface of ball 63. In addition, conditions A to F are satisfied at at least one of the surface of screw shaft 61, the surface of ball nut 62 and the surface of ball 63.

Each of screw shaft 61, ball nut 62 and ball 63 is formed by performing preparation step S1, carbonitriding treatment step S2, quenching step S3, cooling step S4, tempering step S5, and post-treatment step S6. However, shapes of workpieces for forming screw shaft 61, ball but 62 and ball 63 is different from the shapes of the workpieces for forming inner ring 10, outer ring 20 and rolling element 30.

In ball screw 110 as well, it is possible to ensure the hardness at each of the surface of screw shaft 61, the surface of ball nut 62 and the surface of ball 63 while improving the static load capacity at each of the surface of screw shaft 61, the surface of ball nut 62 and the surface of ball 63.

The example in which the heating temperature in carbonitriding treatment step S2 is equal to or higher than 800°C has been described above. However, the heating temperature may be equal to or higher than 1000°C from the perspective of shortening the holding time. In this case, secondary quenching may be performed to prevent a decrease in hardness and static load capacity caused by coarsening of crystal grains.

Although the embodiment of the present invention has been described above, the above-described embodiment can be modified in various manners. In addition, the scope of the present invention is not limited to the above-described embodiment. The scope of the present invention is defined by the terms of the claims, and is intended to include any modifications within the scope and meaning equivalent to the terms of the claims.

### REFERENCE SIGNS LIST

100 rolling bearing; 10 inner ring; 10a width surface; 10b width surface; 10c radially inner surface; 10d radially outer surface; 10da raceway surface; 20 outer ring; 20a width surface; 20b width surface; 20c radially inner surface; 20ca raceway surface; 20d radially outer surface; 30 rolling element; 40 cage; 50 carbonitrided layer; 61 screw shaft; 61a outer circumferential surface; 61b thread; 62 ball nut; 62a inner circumferential surface; 62b thread; 63 ball; 64 sealing member; 110 ball screw; A central axis; S1 preparation step; S2 carbonitriding treatment step; S3 quenching step; S4 cooling step; S5 tempering step; S6 post-treatment step; S7 assembling step.

## Claims

1. A mechanical component made of steel subjected to quenching and tempering, the mechanical component comprising
a carbonitrided layer on a surface thereof, wherein
the steel contains 0.13 mass % or more and 0.58 mass % or less of carbon, 0.15 mass % or more and 0.35 mass % or less of silicon, 0.6 mass % or more and 1.1 mass % or less of manganese, less than 0.025 mass ppm of phosphorus, less than 0.025 mass ppm of sulfur, 1.2 mass % or less of chromium, 0.3 mass % or less of molybdenum, 0.25 mass % or less of vanadium, and 0.25 mass % or less of nickel, with a remainder being composed of iron and an unavoidable impurity,
an average carbon concentration in the steel at the surface is equal to or more than 0.6 mass %,
an average nitrogen concentration in the steel at the surface is equal to or more than 0.10 mass %,
a hardness of the steel at the surface is equal to or more than 800 Hv,
a volume ratio of retained austenite in the steel at the surface is equal to or less than 22%,
the mechanical component comes into contact with a rolling element at at least a part of the surface,
a hardness of the steel at a position where a depth from the surface is 0.02 times or more and 0.03 times or less a diameter of the rolling element is equal to or more than 750 Hv, and
a volume ratio of retained austenite in the steel at the position where the depth from the surface is 0.02 times or more and 0.03 times or less the diameter of the rolling element is equal to or less than 20%.

2. The mechanical component according to claim 1, wherein
a depth of a dent formed in the surface when the rolling element comes into contact with the surface is equal to or less than 0.5 µm.

3. The mechanical component according to claim 1, wherein
a static load capacity of the mechanical component is equal to or less than 5.3 GPa.

4. The mechanical component according to claim 3, wherein
a depth of a dent formed in the surface when the rolling element comes into contact with the surface is equal to or less than 0.5 µm.

5. A rolling bearing comprising an inner ring, an outer ring and a rolling element, wherein
at least one of the inner ring, the outer ring and the rolling element is the mechanical component according to any one of claims 1 to 4.

6. A ball screw comprising a screw shaft, a ball nut and a ball, wherein
at least one of the screw shaft, the ball nut and the ball is the mechanical component according to any one of claims 1 to 4.
